Europäisches Patentamt

(19) European Patent Office

Office européen des brevets

(11) Veröffentlichungsnummer : **0 053 718
B1**

(12) **EUROPÄISCHE PATENTSCHRIFT**

(45) Veröffentlichungstag der Patentschrift :
30.01.85

(51) Int. Cl.⁴ : **C 04 B 41/45, C 04 B 35/52**

(21) Anmeldenummer : 81109217.0

(22) Anmeldetag : 29.10.81

(54) Verfahren und Vorrichtung zum Imprägnieren von porösen Stoffen, insbesondere von Kohleerzeugnissen, bei der Herstellung von Kohleelektroden.

(30) Priorität : 06.12.80 DE 3046171

(43) Veröffentlichungstag der Anmeldung :
16.06.82 Patentblatt 82/24

(45) Bekanntmachung des Hinweises auf die Patenterteilung : 30.01.85 Patentblatt 85/05

(84) Benannte Vertragsstaaten :
AT BE CH DE FR GB IT LI LU NL SE

(56) Entgegenhaltungen :
DE-A- 1 471 246
DE-A- 2 716 040
DE-A- 2 732 553
DE-A- 2 745 604
DE-C-   568 097
GB-A-   996 759
US-A- 4 087 011
US-A- 4 098 428

(73) Patentinhaber : Schön, Christian O.
Römerstrasse 1
D-7590 Achern 18 (DE)

(72) Erfinder : Schön, Christian O.
Römerstrasse 1
D-7590 Achern 18 (DE)

(74) Vertreter : Bühling, F. Joachim
Obere Hardtstrasse 4
D-5920 Bad Berleburg 13 (DE)

**Beschreibung**

Die Erfindung betrifft ein Verfahren zum Imprägnieren von porösen Stoffen, insbesondere von Kohleelektroden, wobei Hohlräume in dem porösen Hohlteil in verschiedenen Behandlungsschritten mittels Vakuum und Druck mit einem Imprägniermittel, z. B. Pech mit Zuschlagsstoffen, gefüllt werden.

Die Verwendung von Kohle bzw. Graphitelektroden zum Schmelzen von Stahl in einem elektrischen Schmelzerverfahren gewinnt immer mehr an Bedeutung, da damit u. a. auch die Verarbeitung minderwertigen Schrotts möglich ist. Derartige Elektroden haben einen Durchmesser von ca. 300 bis 800 mm und eine Länge zwischen 1 500 bis 3 000 mm.

Bei dem Herstellungsverfahren, bei welchem gemahlener Koks mit Pech in einer Form verdichtet und unter Sauerstoffabschluß bei ca. 1 000 °C gebrannt wird, entsteht aufgrund sich bildender Dämpfe eine poröse Kohle. Diese Porosität, die unterschiedlich bis etwa 20 % des Gesamtv lumens betragen kann, ist jed ch aus verschiedenen Gründen unerwünscht. Angestrebt wird eine möglichst dichte Kohle, da durch diese mehr Strom geleitet werden kann, sie weniger empfindlich gegen Temperaturschocks, homogener und elastischer ist. Aus diesem Grunde wird die Kohle nachträglich mit Pech imprägniert und nochmals gebrannt.

Es ist bekannt, zum Zwecke der Imprägnierung die in einem Trockner ausgestellte Kohle mit Gas- und/oder Ölbrennern oder auch anderen Energien etwa 2 bis 6 h auf ca. 200 °C aufzuheizen. Anschließend werden die Kohlen mit einem Kran aus dem Trockenschrank in einen Autoklaven gefördert, wo sie einem Unterdruck ausgesetzt werden, um Gase aus den Poren zu saugen. Anschließend wird Pech in den Autoklaven eingelassen, bis die Kohlerohlinge dann völlig bedeckt sind, und dann z. B. durch eine Pumpe ein Überdruck zwischen etwa 6 bis 20 bar erzeugt, wodurch das Pech in die Poren eingedrückt wird. Dieser Druck wird ca. 1 bis 2 h aufrechterhalten. Anschließend wird das überflüssige Pech wieder aus dem Autoklaven abgepumpt, die Kohlen dem Autoklaven entnommen und in ein Kühlbecken gesetzt.

Dieses Verfahren birgt in sich eine Reihe von beträchtlichen Nachteilen. Es wird durch die sehr stark qualmende und unangenehm riechende Kohle eine beträchtliche Umweltverschmutzung verursacht. Die abgesch iedenen Schmutzstoffe gehen in die Luft und werden entweder durch eine thermische Nachverbrennung, die viel Energie verbraucht, beseitigt, oder die Luft wird durch wartungsaufwendige Elektrofilter gereinigt. Insgesamt ist der Arbeitsaufwand relativ groß und lohnontensiv, da er mit sehr viel Handarbeit verbunden ist. Die Aufheizung der Kohlen ist ungleichmäßig. Außerdem strömt beim Einlaufen des Pechs in den evakuierten Autoklaven zum Teil wieder Luft in die Poren, wodurch eine völlige Imprägnierung wiederum verhindert wird. Wegen der Größe eines solchen Autoklaven und des oft schlechten Verhälnisses Behältervolumen zu Produktvolumen ist er energiewirtschaftlich sehr ungünstig.

Der Erfindung liegt die Aufgabe zugrunde, ein Imprägnierungsverfahren der eingangs genannten Gattung zu schaffen, bei welchem insbesondere eine Umweltverschmutzung weitgehend vermieden wird, das rationell und energiesparend durchgeführt werden kann und mit welchem eine sehr homogene und dichte Kohle erhalten wird.

Sie löst das Problem dadurch, daß wenigstens ein Rohteil in einen dieses bzw. diese relativ eng umschließenden ortsveränderbaren Behälter eingelegt wird, wobei im Falle von mehreren gleichzeitig eingelegten Rohteilen zwischen diesen möglichst geringe Zwischenräume belassen werden, und daß der Behälter an Behandlungsstationen wenigstens für Aufheizen, für Imprägnieren mittels Vakuum und Druck und für Abkühlen nacheinander transportiert und im Bereich jeder Behandlungsstation mit einer Anschlußleitung für den jeweiligen Behandlungsschritt verbunden wird.

Durch das genannte Verfahren ist es möglich, die sonst übliche starke Umweltverschmutzung durch die qualmenden und unangenehm riechenden Kohlen während des Imprägnierens zu vermeiden. Der Arbeitsaufwand ist relativ gering, so daß gegenüber den bekannten Verfahren Arbeitskräfte eingespart werden können. Außerdem werden die Kohlen bei diesem Verfahren völlig gleichmäßig aufgeheizt. Dabei werden vorzugsweise die Behälter zum Aufheizen in der Aufwärmstation an die Abgasleitung von Brennöfen für das anschließende Brennen der Kohle angeschlossen. Es wird hierdurch eine außerordentliche Energieeinsparung erzielt. Dabei werden vorzugsweise die heißesten Abgase zuerst in den Behälter mit den heißesten Rohteilen geleitet und anschließend in die jeweils kühleren. Es werden also die Abgase in einer stufenweisen Abkühlung genutzt. Zum Aufheizen der Kohlen werden dabei zwischen 1 und 4 Stunden benötigt, je nachdem, wie dünn oder dick die Kohlen sind. In vorteilhafter Weiterbildung der Erfindung kann die Aufheizung durch die Abgase durch einen geregelten Brenner gestützt werden. Dies ist insbesondere bei den Behältern erforderlich, durch welche schon mehr oder weniger abgekühlte Abgase geleitet werden. Das Abgas kühlt sich bei diesem Vorgang von etwa 700 °C auf ca. 200 °C ab. Durch die Stützaufheizung mittels eines Brenners kann ein eventuelles Manko an Temperatur oder ein zu geringes Abgasvolumen ausgeglichen werden.

Gemäß einer vorteilhaften Weiterbildung der Erfindung wird der Behälter nach dem Aufheizen in der Aufheizstation luftdicht abgeschlossen und an eine Unterdruckleitung angeschlossen. Zu diesem Zweck wird er erfindungsgemäß zu einer weiteren Station gefahren, welche einen Anschlußrüssel für eine solche Unterdruckleitung aufweist und an diesen angeschlossen. Nach dem Abschalten der Unterdruckleitung wird Pech eingelassen, das aufgrund des sehr kleinen Volumens, das auszufüllen ist, den Behälter schlagartig innerhalb von Sekunden füllt und die Kohle umhüllt. Das Vakuum beträgt etwa 1333 Pa (10 Torr). Dabei kann der Vakuumpumpe eine Dampfstrahlpumpe vorgeschaltet sein. Die bei der Vakuumerzeugung entstehenden Pechdämpfe werden kondensiert und niedergeschlagen. Dabei wird als Kondensationsmittel Kreislaufwasser aus der Anlage verwendet. Das abfließende Kreislaufwasser wird über einem Koksfilter gereinigt. Aufgrund des schnellen Füllens besteht keine Chance, daß in die Poren Luft oder Dämpfe angesaugt werden, welche ein vollständiges Ausfüllen verhindern würden. Im weiteren Verfahren wird der Behälter an einer anderen Station, an die er verbracht und angeschlossen worden ist, mit Druck beaufschlagt und anschließend nach etwa 1 bis 3 Stunden das restliche, nicht in die Kohle eingedrungene Pech wieder aus dem Behälter herausgedrückt. Es besteht gegebenenfalls auch die Möglichkeit, anschließend den Behälter auf eine Temperatur zwischen 500 °C und 1 000 °C aufzuheizen und das in die Kohle eingedrungene Pech ebenfalls in Koks zu verwandeln, d. h. die Kohle zu brennen. Die Kohlen müssen also bei diesen Verfahrensschritten nicht, wie es bisher der Fall ist, dem feststehenden Autoklaven entnommen, abgekühlt und anschließend in einen besonderen Brennofen überführt werden, sondern sie verbleiben in dem verfahrbaren Behälter. Dies bedeutet eine weitere Einsparung an Energie und an Arbeitszeit sowie eine weitere Verminderung der Umweltverschmutzung. Anschließend wird die Kohle wieder abgekühlt, z. B. durch Einlassen von kaltem Wasser oder durch Luftumflutung, und darauf entnommen. Die beim Einlassen von Wasser zum Kühlen entstehenden Pechdämpfe werden an dem dabei entstehenden kondensierenden Dampf gebunden und das Kondensat wird mit dem einströmenden Wasser benützt, um die Kohlen vorabzukühlen. Das verschmutzte Kühlwasser wird in weiterer Ausbildung des erfindungsgemäßen Verfahrens zum Reinigen über einen Koksfilter geleitet, an welchem der größte Teil der Pechverschmutzung vom Koks aufgesaugt wird. Dieser Koks wird anschließend für die Kohleerzeugung verwendet.

Die Kohle kann in einem Kühlbecken zur restlichen Abkühlung abgesetzt werden. Auch bei diesen Abkühlvorgängen wird eine Umweltverschmutzung aufgrund der wesentlichen Abkühlung innerhalb des Behälters weitgehend vermieden.

Eine Vorrichtung zum Durchführen des geschilderten Verfahrens ist erfindungsgemäß durch einen im wesentlichen rohrförmigen ortsveränderbaren Hohlkörper gekennzeichnet, der zur Erzeugung eines Unterdruckes in seinem Innenraum dicht abschließbar ist, wobei an wenigstens einer Stirnseite ein Abnehmbarer Deckel angeordnet ist, und der Stutzen zum wahlweisen Anschluß von Leitungen für Unterdruck, Imprägniermittel, Überdruck, Heizgase und Kühlmittel aufweist. Gemäß einer weiteren bevorzugten Ausbildung der Vorrichtung dient bei der Anlegung von Unterdruck zum Abdichten zwischen Behälter und Deckel vorzugsweise das Imprägniermittel, z. B. Pech. Hierdurch wird eine absolute Abdichtung auch bei relativ sehr heißem Behälter gewährleistet, wobei andere bekannte Abdichtungen mittels Kunststoffen oder dergleichen völlig ungeeignet wären, weil sie verbrennen würden.

Diese und weitere Vorteile der Erfindung werden durch die im folgenden anhand der Zeichnung beschriebenen Ausführungsbeispiele näher erläutert.

In der Zeichnung zeigt

Figur 1 im Schema eine gesamte Imprägnieranlage für Kohlen,

Figur 2 in Ansicht einen an die einzelnen Stationen der Anlage nach Fig. 1 heranfahrbaren Behälter für die Kohlen,

Figur 3 in Ansicht eine Alternativausbildung eines als Hängebahn ausgebildeten Behälters,

Figur 4 schematisch in Draufsicht eine Aufwärmstation,

Figur 5 in Stirnansicht die Aufwärmstation nach Fig. 4,

Figur 6 in Stirnansicht eine Alternativausbildung der Aufwärmstation nach Fig. 4 und

Figur 7 den oberen Teil eines Behälters mit einer besonderen Vorrichtung zum einwandfreien Abdichten des Deckels gegenüber dem Behälter.

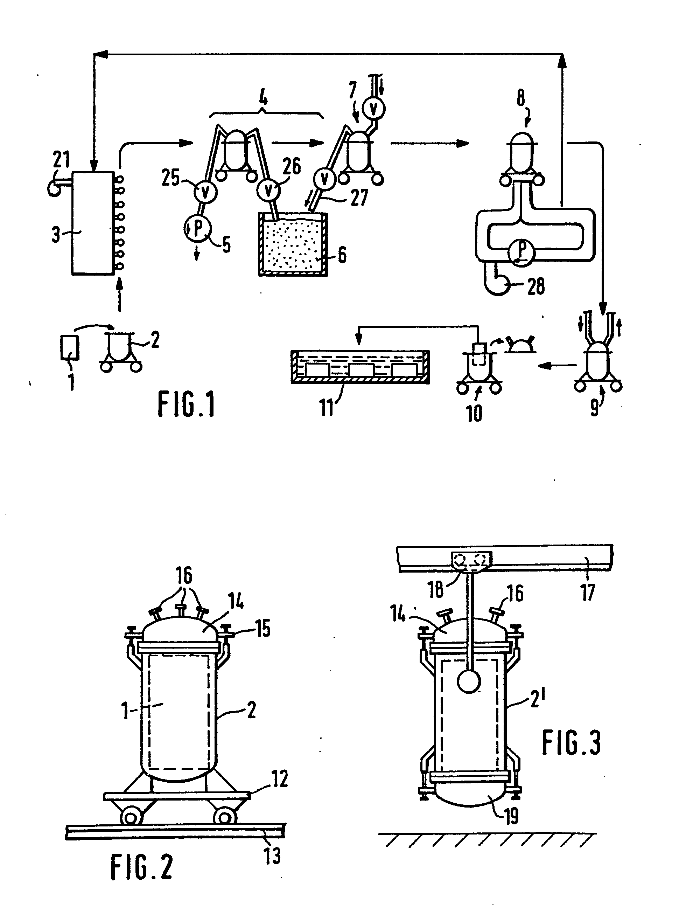

Anhand des Schemas der Fig. 1 wird zunächst das gesamte Imprägnierverfahren ganz allgemein beschrieben. Die Kohle 1 wird in einen verfahrbaren Behälter 2 eingelegt und mittels diesem an die Aufwärmstation 3 transportiert und dort durch in diese eingebrachte Heizgase aufgeheizt. Von hier gelangen die Kohlen mittels des verfahrbaren Behälters 2 in die Zentralstation 4, wo die Behälter nach dem Schließen einem durch eine Vakuumpumpe 5 erzeugten Vakuum ausgesetzt werden und in den evakuierten Behälter aus einem Vorratsbehälter 6 Pech eingefüllt wird. In einer darauffolgenden Druckhaltestation 7 wird ein bestimmter Druck aufrechterhalten und die Behälter anschließend an eine Brennstation 8 angeschlossen, in welcher das in die Kohle eingebrachte Pech in Koks umgewandelt wird. Die hierbei anfallenden Abgase werden in die Aufwärmstation 3 zum Aufwärmen der Kohlen geleitet. Von der Brennstation werden die Behälter zur Kühlstation 9 transportiert, in welcher durch die Behälter 2 Kühlluft oder Kühlwasser geleitet wird. In der darauffolgenden Station 10 werden die Kohlen den Behältern 2 entnommen und gegebenenfalls in einem Wasserkühlbecken 11 weiter abgekühlt. Die Brennstation 8 kann auch gegebenenfalls entfallen, so daß dann die Behälter unmittelbar an die Kühlstation geleitet werden.

In Fig. 2 ist der als Autoklave ausgebildete Behälter 2 gezeigt, der auf einem spurgebundenen Wagen 12 auf Schienen 13 zu den einzelnen Stationen, die im folgenden näher erläutert sind, transportiert werden kann. Der Behälter weist oben einen Deckel 14 auf, der mittels beliebiger Verschlüsse 15 wie z. B. Schraub-, Knebel- oder Kniehebelverschlüsse leicht lösbar befestigt ist. Die im wesentlichen zylindrische Kohle 1 wird von oben in den Behälter gehoben, wobei der Behälter einen solchen Durchmesser hat, daß zwischen Kohle 1 und Behälterwandung ein möglichst geringer Zwischenraum verbleibt. Werden in den Behälter mehrere Kohlen geringeren Durchmessers eingelegt, so sollten diese ebenfalls möglichst eng aneinander grenzen und auch so angeordnet werden, daß der Zwischenraum zwischen den Kohlen und der Innenwand des Behälters möglichst gering wird. Am Deckel 14 befinden sich Anschlußstutzen 16 zum Anschluß an die verschiedenen Stationen. Dargestellt sind beispielsweise drei derartige Stutzen. Die Anzahl der Anschlüsse hängt von jeweiligen konstruktiven Wünschen und Erfordernissen ab. Im allgemeinen werden Anschlüsse für Pechzufluß und -ablauf, für Vakuum, für das Kühlmittel usw. benötigt. Es kann aber auch ein Anschluß nacheinander für verschiedene Funktionen benutzt werden, wobei im Falle von z. B. nur zwei Anschlüssen diese von außen durch Ventilgruppen umgesteuert werden können. Derartige Einrichtungen sind an sich bekannt und bilden nicht den Gegenstand dieser Anmeldung.

In Fig. 3 ist eine Alternativausbildung eines Behälters 2' dargestellt, der als Einschienenhängebahn ausgebildet ist. Er wird an einer über Kopf angeordneten Schiene 17 mittels einer Laufkatze 18 transportiert. Dieser Behälter hat einen oberen und einen unteren Deckel 14 bzw. 19, die beide lösbar sind. Die Anschlußstutzen 16 befinden sich nur am oberen Deckel 14.

Anstatt der stehend gezeigten Anordnung beider Alternativausbildungen können die Behälter auch liegend oder schräg angeordnet sein. Sie können auch spurungebunden mittels eines lenkbaren Fahrzeuges transportiert werden.

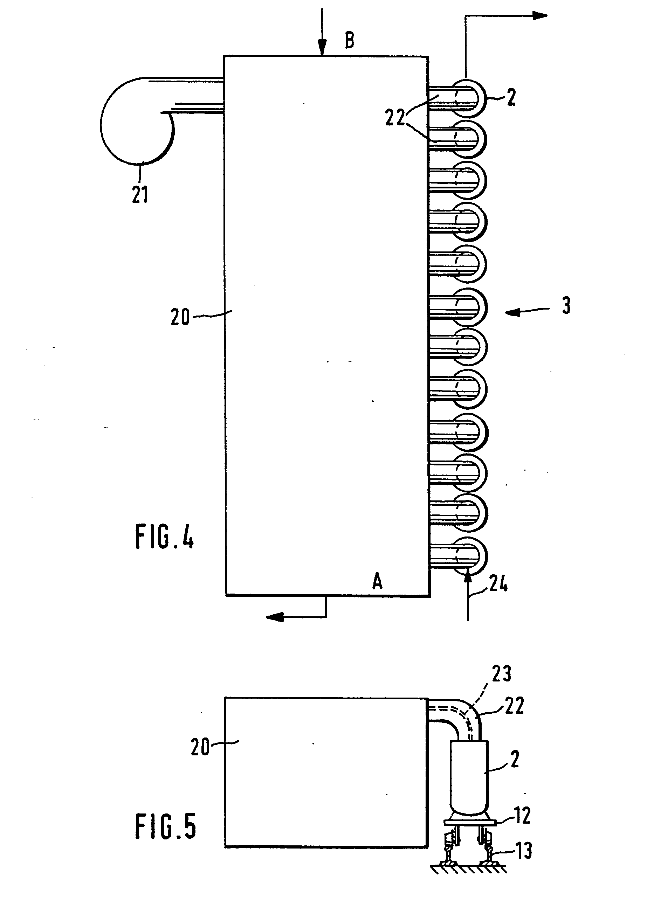

Anhand der Figuren 4, 5 und 6 ist eine Ausbildungsmöglichkeit einer Aufwärmstation 3 dargestellt, an welcher die verfahrbaren Behälter 2 bzw. 2' zunächst angeschlossen werden, um die darin befindliche Kohle aufzuheizen. Die Aufwärmstation 3 weist einen großen geschlossenen, im wesentlichen quaderförmigen Kasten 20 für von einem Ofen kommende Heizgase auf, wobei diese z. B. der Brennstation 8 entnommen werden können. Die Förderung der Heizgase erfolgt in an sich bekannter Weise durch hier nicht dargestellte Ventilatoren. An den Kasten 20 ist noch ein zusätzlicher Hilfsbrenner 21 angeschlossen. Der Kasten 20 kann eine Länge von etwa 30 m oder mehr haben, und seine Stirnfläche kann eine Abmessung bis zu 5 × 5 m oder größer aufweisen. Aus einer Längsseite dieses Kastens führen eine größere Anzahl von Anschlußstutzen 22 zum Anschluß an die Behälter 2 gemäß Fig. 2 mit nur einem oberen Deckel 14, der zum Zwecke des Anschlusses abgenommen ist.

Wie in Fig. 5 dargestellt, werden die Heizgase durch die Anschlußstutzen 22 von oben her sowohl zugeführt als auch wieder aus dem Behälter herausgeleitet, wenn sie Wärme an die in dem Behälter befindliche Kohle abgegeben haben. Zu diesem Zweck ist in dem Anschlußstutzen 22 eine Zwischenwand 23 vorgesehen. In einer möglichen Verfahrensweise und entsprechenden Ausführungsform werden die Behälter schrittweise von den Anschlußstutzen von der Kastenseite A aus beginnend nacheinander in Pfeilrichtung 24 an die folgenden Anschlußstutzen bewegt und dort angeschlossen, wobei die Bewegung jeweils auch in Gruppen, z. B. Zweier- oder Dreiergruppen erfolgen kann. Die Heizgase dagegen werden im Gegenstrom von der Kastenseite B aus eingeleitet, derart, daß in die auf dieser Seite befindlichen Anschlußstutzen 22 die heißesten Gase gelangen und in die auf der Seite A die am meisten abgekühlten Gase, wobei auch hier in entsprechender Weise eine gruppenweise Verbindung der einzelnen Anschlüsse innerhalb des Kastens 20 vorgesehen sein kann. Es besteht die Möglichkeit, durch geeignete, hier nicht gezeigte Klappen entsprechende Umsteuerungen zur Bildung von Gruppen vorzunehmen. Es werden mit einer solchen Anordnung die zunächst kalten Kohlen mit den Heizgasen niederster Temperatur erwärmt und fortschreitend die bereits schon erwärmten Kohlen mit entsprechend wärmeren Gasen. Während des jeweiligen Weiterschreitens der Behälter werden die Ventilatoren, Ölbrenner und dergleichen abgeschaltet. Das geschilderte Verfahren bietet ein Optimum an Energieausnutzung der Heizgase. Das Verfahren wird aber nur durch die verfahrbare Ausbildung der Behälter ermöglicht.

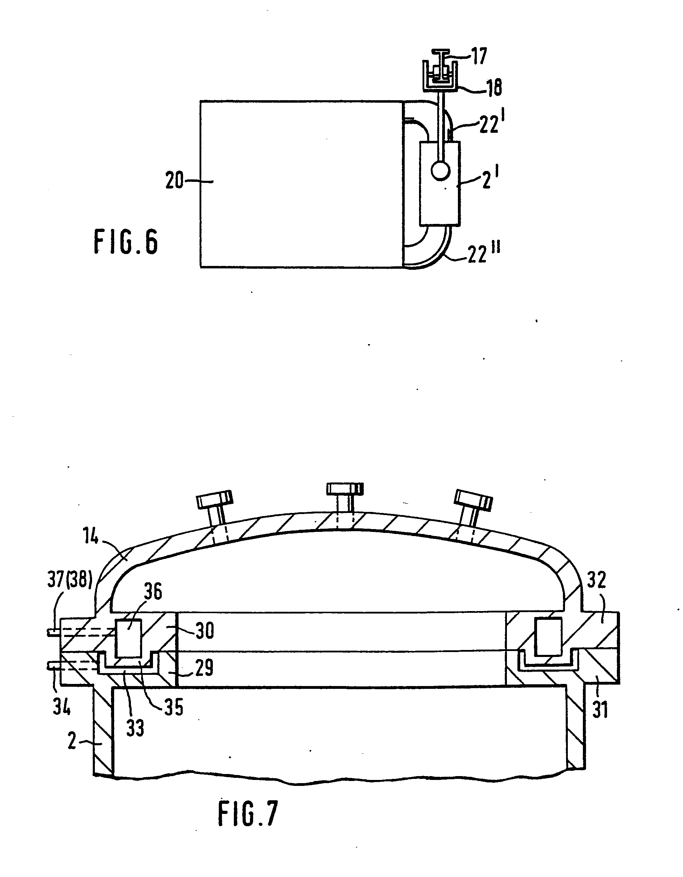

Fig. 6 zeigt eine Alternativausbildung des Kastens 20 zum Anschluß von solchen Behältern 2', d e gemäß F g. 3 oben und unten e nen Deckel haben. Die Zuleitung der Heizgase erfolgt hier von oben her durch Stutzen 22' und die Ableitung unten aus dem Behälter heraus über Stutzen 22''. Es erübrigen sich somit Zwischenwände in den Stutzen.

In einer anderen Verfahrensweise werden die Behälter nicht schrittweise weiterbewegt, sondern sie verbleiben während der gesamten Aufheizperiode an ein und demselben Stutzen angeschlossen. In diesem Falle hat jeder angeschlossene Behälter einen Temperaturfühler, der über einen Rechner Klappen innerhalb des Behälters 20 derart steuert, daß Heizgase mit der jeweils erforderlichen Temperatur den entsprechenden Behältern zugeleitet werden. Dieses Verfahren ist dann besonders zweckmäßig, wenn die Kohlen in den einzelnen Behältern unterschiedliche Abmessungen haben und die Aufheizzeiten für jeden Behälter unterschiedlich sind. Auch hier werden den zunächst noch kalten Kohlen die schon abgekühlten Heizgase zugeführt und den bereits erwärmten Kohlen die jeweils heißeren Heizgase. Auch dieses Verfahren bietet eine bisher nicht erreichte wirtschaftliche Ausnutzung der Heizgase.

In der auf die Aufwärmstation 3 folgenden Zentralstation 4, in welcher die Behälter 2 bzw. 2' durch Aufsetzen der Deckel 14 bzw. 19 geschlossen sind, werden die Behälter an eine Vakuumpumpe 5 angeschlossen und evakuiert. Nach dem Schließen entsprechender Ventile 25 zwischen der Vakuumanlage 5 und den Behältern 2 bzw. 2' werden Ventile 26 geöffnet, die in den Pechvorratsbehälter 6 führen. Das Pech strömt in die Behälter ein, bis die Kohlenvöllig bedeckt sind. Anschließend wird in der Druckhaltestation in dem Behälter ein Überdruck zwischen etwa 6 bis 20 bar erzeugt, wodurch das Pech in die Poren der Kohle eingedrückt wird. Dieser Druck wird ca. 1 bis 2 Stunden aufrecht erhalten. Anschließend wird das überflüssige Pech über die Leitung 27 wieder aus dem Behälter 2 bzw. 2' in den Pechvorratsbehälter 6 abgepumpt.

Nach diesem Verfahrensschritt besteht nunmehr die Möglichkeit, das in die Kohle eingedrungene Pech in einer Brennstation 8 in Koks umzuwandeln. Hierzu dient ein Heißgaserzeuger 28. Dabei wird der Behälter direkt oder indirekt beheizt.

Anschließend werden die Behälter 2 bzw. 2' in der Kühlstation 9 an Kühlwasser oder Kühlluft oder auch z. B. ein Kühlgas (z. B. Stickstoff) angeschlossen, um sie abzukühlen. Wenn die Kohlen in der Kühlstation 9 ausreichend abgekühlt sind, werden sie in der Entnahmestation 10 nach Abschrauben des oberen Deckels 14 entnommen und können anschließend noch zum vollständigen Abkühlen in ein Wasserkühlbecken 11 eingelegt werden.

Ein besonderes Problem stellt die absolut dichte Verbindung des bzw. der Deckel 14 bzw. 19 mit dem Behälter 2 bzw. 2' dar. Wie in Fig. 7 dargestellt, wird zur Erzielung einer solchen notwendigen absoluten Abdichtung das zur Imprägnierung dienende Pech verwendet. Sowohl der Behälter 2 als auch der Deckel 14 weisen je nach innen weisende Flansche 29 bzw. 30 und nach außen weisende Flansche 31 bzw. 32 auf. Die größeren Flansche 31 und 32 dienen, wie schon oben beschrieben, zum Befestigen eines mechanischen Verschlußmittels (Verschluß 15 in Fig. 2). Der innere Flansch 29 des Behälters 2 weist eine Ringnut 33 auf, in welche eine Leitung 34 führt, durch welche Pech in die Ringnut 33 eingebracht werden kann. Der innere Flansch 30 des Deckels ragt mit einem Ringsteg 35 in die Nut 33 des inneren Flansches 29. In dem inneren Flansch 30 ist eine ringförmige Temperierkammer 36 vorgesehen, durch welche in Umfangsrichtung versetzt mündende Zu- und Ableitungen 37 bzw. 38 ein Kühlmittel gefördert werden kann. Zwischen der Einmündung der Zuleitung 37 in die Temperierkammer 36 und der Ableitung 38 ist die Temperierkammer durch eine in der Figur nicht zu sehende Zwischenwand unterteilt. Wenn der Deckel 14 aufgesetzt ist, wird Pech durch die Leitung 34 in den zwischen dem Steg 35 und der Innenwand der Ringnut 33 verbleibenden Ringspalt gedrückt und gleichzeitig Kühlflüssigkeit durch die Temperierkammer geleitet. Das Pech erstarrt und bildet eine vollkommene Abdichtung zum Aufbringen eines Vakuums innerhalb des Behälters 2. Zum Lösen der Dichtung kann in die Temperierkammer 36 ein warmes Temperiermittel geleitet werden, um das Pech wieder in einen pastösen Zustand überzuführen.

## Ansprüche

1. Verfahren zum Imprägnieren von porösen Stoffen, insbesondere von Kohleerzeugnissen für die Elektrodenherstellung zum Elektroschmelzen von Metallen, wobei die Hohlräume in dem porösen Rohteil in verschiedenen Behandlungsschritten mittels Vakuum und Druck mit einem Imprägniermittel, z. B. Pech mit Zuschlagstoffen, gefüllt werden, dadurch gekennzeichnet, daß wenigstens ein Rohteil in einen dieses bzw. diese eng umschließenden ortsveränderbaren Behälter eingelegt wird, wobei im Falle von mehreren gleichzeitig eingelegten Rohteilen zwischen diesen möglichst geringe Zwischenräume belassen werden, und daß der Behälter an Behandlunsstationen wenigstens für Aufheizen, für Imprägnieren mittels Vakuum und Druck und für Abkühlen nacheinander transportiert und im Bereich jeder Behandlungstation mit einer Anschlußleitung für den jeweiligen Behandlungsschritt verbunden wird.

2. Verfahren nach Anspruch 1, dadurch gekennzeichnet, daß die Behälter zum Aufheizen der Rohteile an einer Aufwärmstation an die Abgasleitung von Brennöfen für das anschließende Brennen der Kohle angeschlossen werden.

3. Verfahren nach Anspruch 2, dadurch gekennzeichnet, daß die heißesten Abgase zuerst in den Behälter mit den heißesten Rohteilen gelassen werden und anschließend in die jeweils kühleren.

4. Verfahren nach Anspruch 2 oder 3, dadurch gekennzeichnet, daß die Aufheizung durch die Abgase durch einen geregelten Brenner gestützt wird.

5. Verfahren nach einem der Ansprüche 1 bis 4, dadurch gekennzeichnet, daß der Behälter nach der Aufheizstation luftdicht abgeschlossen und an eine Unterdruckleitung angeschlossen wird.

6. Verfahren nach Anspruch 5, dadurch gekennzeichnet, daß nach dem Abschalten des Unterdruckes schlagartig Pech in den Behälter eingelassen wird und der Behälter an einer weiteren Station anschließend unter Überdruck gesetzt und nach etwa einer bis drei Stunden das restliche nicht in die Kohle gedrungene Pech wieder herausgedrückt wird.

7. Verfahren nach Anspruch 6, dadurch gekennzeichnet, daß die beim Aufheizen der Kohle, bei der Vakuumerzeugung und beim Herausdrücken des Peches entstehenden Gase und Dämpfe an Wasser gebunden werden.

8. Verfahren nach Anspruch 7, dadurch gekennzeichnet, daß nicht gebundene Gase wie Stickstoff oder Sauerstoff, in einem mit dem Kreislaufwasser beaufschlagbaren Kühlturm nachgereinigt werden.

9. Verfahren nach einem der Ansprüche 6 bis 8, dadurch gekennzeichnet, daß der Behälter auf wenigstens 500 °C aufgeheizt und das in die Kohle eingedrungene Pech in Kohle verwandelt wird.

10. Verfahren nach einem der Ansprüche 6 bis 8, dadurch gekennzeichnet, daß das Pech, was von der Kohle nicht aufgenommen wurde, herausgedrückt, anschließend kaltes Wasser eingelassen und die Kohle zum restlichen Abkühlen in einem Kühlbecken entnommen wird.

11. Verfahren nach Anspruch 10, dadurch gekennzeichnet, daß das verschmutzte Kühlwasser über einen Koksfilter geleitet wird.

12. Verfahren nach Anspruch 11, dadurch gekennzeichnet, daß die im Koksfilter aufgesaugten Pechverschmutzungsteile für die Kohleerzeugung wiederverwendet werden.

13. Vorrichtung zum Durchführen des Verfahrens nach einem der Ansprüche 1 bis 12, gekennzeichnet durch einen im wesentlichen rohrförmigen ortsveränderbaren Behälter (2, 2'), der zur Erzeugung eines Unterdruckes in seinem Innenraum dicht abschließbar ist, wobei an wenigstens einer Stirnseite ein abnehmbarer Deckel (14, 19) angeordnet ist, und der Stutzen (16) zum wahlweisen Anschluß von Leitungen für Unterdruck, Imprägniermittel, Überdruck, Heizgase und Kühlmittel aufweist.

14. Vorrichtung nach Anspruch 13, dadurch gekennzeichnet, daß der Behälter (2, 2') spurgeführt verfahrbar ist.

15. Vorrichtung nach Anspruch 13 oder 14, dadurch gekennzeichnet, daß der Behälter (2) auf einem Wagen (12) verfahrbar ist.

16. Vorrichtung nach Anspruch 13 oder 14, dadurch gekennzeichnet, daß der Behälter (2') als Hängebahn ausgebildet ist.

17. Vorrichtung nach Anspruch 13 oder 14, dadurch gekennzeichnet, daß der Behälter (2) auf dem Rand einer drehbaren Plattform angeordnet ist und außerhalb der Plattform an dessen Peripherie Anschlüsse für die Behandlungsstationen vorgesehen sind.

18. Vorrichtung nach einem der Ansprüche 13 bis 17, dadurch gekennzeichnet, daß das Imprägniermittel, z. B. Pech, bei der Anlegung von Unter- oder Überdruck zum Abdichten zwischen Behälter (2) und Deckel (14) dient.

19. Vorrichtung nach Anspruch 18, dadurch gekennzeichnet, daß Deckel (14) und Behälter (2) je einen Flansch (30 bzw. 29) aufweisen, von denen der eine (29) eine zum gegenüberliegenden anderen Flansch (30) zu offenen Ringnut (33) aufweist, die an eine Zuleitung (34) für das Pech in Verbindung steht, und der andere Flansch (30) einen der Ringnut (33) gegenüberliegenden geschlossenen Temperiermittelkanal (36) aufweist, aus dem eine Zu- und Ablaufleitung (37 und 38) nach außen führt.

20. Vorrichtung nach Anspruch 19, dadurch gekennzeichnet, daß der der Ringnut (33) gegenüberliegende Flansch (30) einen in dier Nut ragenden Ringsteg (35) aufweist, der kleinere Höhe und Tiefe als die Ringnut hat.

## Claims

1. Process for the impregnation of porous substances, in particular carbon products for the production of electrodes for electric smelting of metals, in which the cavities in the porous blank are filled with an impregnating agent, e.g. pitch with aggregates, by means of vacuum and pressure in several treatment steps, characterised in that one or more than one blank' is or are introduced into a transportable container closely surrounding the said blank or blanks, as little space as possible being left between the blanks in cases where several blanks are introduced simultaneously, and in that the container is transported successively to treatment stations at least for heating, for impregnating by means of vacuum and pressure and for cooling, and is connected, in the region of each treatment station, to a connecting duct for the particular treatment step.

2. Process according to claim 1, characterised in that the containers for heating up the blanks in a heating up station are attached to the exhaust gas duct for combustion furnaces for the subsequent burning of the carbon.

3. Process according to claim 2, characterised in that the hottest exhaust gases are first admitted into the container containing the hottest blanks and subsequently into the next cooler containers in succession.

4. Process according to claim 2 or claim 3, characterised in that heating by the exhaust gases is assisted by a controlled burner.

5. Process according to one of claims 1 to 4, characterised in that after the heating station, the container is made airtight and connected to a vacuum pipe.

6. Process according to claim 5, characterised in that after the vacuum has been switched off, pitch is suddenly admitted into the container and the container is subsequently put under excess pressure in a further station and, after about 1 to 3 hours, the remaining pitch which has not entered the carbon is forced out again under pressure.

7. Process according to claim 6, characterised in that the gases and vapours formed in the process of heating up of the carbon, production of the vacuum and forcing out of the pitch are taken up in water.

8. Process according to claim 7, characterised in that gases which are not taken up, such as nitrogen or oxygen, are after-purified in a cooling tower which can be supplied with circulating water.

9. Process according to one of claims 6 to 8, characterised in that the container is heated to at least 500 °C and the pitch which has penetrated the carbon is converted into carbon.

10. Process according to one of claims 6 to 8, characterised in that the pitch which has not been taken up by the carbon is forced out, cold water is subsequently let in and the carbon is removed for final cooling in cooling tank.

11. Process according to claim 10, characterised in that the contaminated cooling water is passed over a coke filter.

12. Process according to claim 11, characterised in that the particles of pitch impurities absorbed in the coke filter are re-used for the production of carbon.

13. Apparatus for carrying out the process according to one of the claims 1 to 12, characterised by a substantially tubular transportable container (2, 2') which can be tightly sealed off for the production of a vacuum in its interior, a removable cover (14, 19) being arranged at least at one end face, and said container having connecting terminations (16) for the selective attachment of pipes for vacuum, impregnating agents, excess pressure, heating gases and cooling agents.

14. Apparatus according to claim 13, characterised in that the container (2, 2') can be guided on tracks for transport.

15. Apparatus according to claim 13 or claim 14, characterised in that the container (2) can be transported on a carriage (12).

16. Apparatus according to claim 13 or claim 14, characterised in that the container (2') is constructed as an overhead trolley.

17. Apparatus according to claim 13 or claim 14, characterised in that the container (2) is arranged on the edge of a rotatable platform and connections for the treatment stations are provided outside the platform, at the periphery thereof.

18. Apparatus according to one of claims 13 to 17, characterised in that the impregnating agent, e. g. pitch, serves as a seal between the container (2) and cover (14) during the application of vacuum or pressure.

19. Apparatus according to claim 18, characterised in that the cover (14) and container (2) have each a flange (30 and 29), respectively, one of which (29) has an annular groove (33) open to the other, opposite flange (30), which groove (33) communicates with a supply pipe (34) for the pitch, while the other flange (30) has a closed duct (36) for tempering means, which duct is situated opposite the annular groove (33) and from which an inflow and outflow pipe (37 and 38) leads to the outside.

20. Apparatus according to claim 19, characterised in that the flange (30) situated opposite the annular groove (33) has an annular step (35) which extends into the groove but has less height and depth than the groove.

## Revendications

1. Procédé pour imprégner des matériaux poreux, en particulier des produits en charbon pour la fabrication d'électrodes en vue de la fusion de métaux par voie électrique, dans lequel les cavités de la pièce brute poreuse sont emplies, en différentes étapes de traitement, d'un agent d'imprégnation, par exemple de la poix ou du brai comportant des additifs, au moyen d'une mise en dépression et en pression, caractérisé en ce qu'au moins une pièce brute est disposée dans une enceinte déplaçable qui l'entoure ou les entoure de manière relativement étroite, des interstices aussi restreints que possible étant laissés entre plusieurs pièces brutes dans le cas où plusieurs pièces brutes sont introduites simultanément, et en ce que l'enceinte est transportée jusqu'à des postes de traitement au moins pour le chauffage, pour l'imprégnation par mise en dépression et en pression et pour le refroidissement et est branchée dans la zone de chaque poste de traitement à une conduite de raccordement pour l'étape de traitement associée.

2. Procédé selon la revendication 1, caractérisé en ce que, pour le chauffage des pièces brutes à un poste de chauffage, les enceintes sont reliées à la conduite de gaz brûlés provenant de fours de calcination destinés à la calcination suivante des charbons.

3. Procédé selon la revendication 2, caractérisé en ce que les gaz brûlés les plus chauds sont en premier lieu introduits dans l'enceinte contenant les pièces brutes les plus chaudes, et ensuite dans des enceintes de plus en plus froides.

4. Procédé selon la revendication 2 ou 3, caractérisé en ce que le chauffage au moyen des gaz brûlés est assisté par un brûleur régulé.

5. Procédé selon l'une des revendications 1 à 4, caractérisé en ce que l'enceinte est fermée de manière étanche à l'air après le poste de chauffage et est reliée à une conduite de mise en dépression.

6. Procédé selon la revendication 5, caractérisé en ce qu'après l'arrêt de la mise en dépression, de la poix ou du brai est introduit(e) de manière brusque dans l'enceinte, en ce que l'enceinte est ensuite mise en pression à un autre poste et en ce qu'au bout d'une à trois heures environ, le reste de la poix ou du brai n'ayant pas pénétré dans le charbon est à nouveau évacué.

7. Procédé selon la revendication 6, caractérisé en ce que les gaz et les vapeurs engendrés lors du chauffage des charbons, de la mise en dépression et de l'évacuation de la poix ou du brai, sont combinés avec de l'eau.

8. Procédé selon la revendication 7, caractérisé en ce que les gaz non combinés, tels que l'azote ou l'oxygène, sont purifiés dans une tour de refroidissement apte à recevoir de l'eau d'un circuit.

9. Procédé selon l'une des revendications 6 à 8, caractérisé en ce que l'enceinte est chauffée à 500 °C au moins, et en ce que la poix ou le brai ayant pénétré dans le charbon est converti(e) en charbon.

10. Procédé selon l'une des revendications 6 à 8, caractérisé en ce que la poix ou le brai qui n'a pas été absorbé(e) par le charbon, est évacué(e), en ce que l'eau froide est ensuite introduite et en ce que les charbons sont extraits pour terminer leur refroidissement dans un bassin de refroidissement.

11. Procédé selon la revendication 10, caractérisé en ce que l'eau de refroidissement polluée est acheminée sur un filtre à coke.

12. Procédé selon la revendication 11, caractérisé en ce que les particules polluantes de poix ou de brai absorbées par le filtre à coke sont réutilisées pour la fabrication du charbon.

13. Dispositif pour la mise en œuvre du procédé selon l'une des revendications 1 à 12, caractérisé par une enceinte déplaçable (2, 2') de forme sensiblement tubulaire, qui peut être fermée de façon étanche en vue de la création d'une dépression dans son espace intérieur, un couvercle amovible (14, 19) étant disposé sur l'une au moins des faces frontales, et qui présente des raccords (16) pour brancher à volonté des conduites pour la mise en dépression, l'agent d'imprégnation, la mise en pression, les gaz de chauffage et l'agent de refroidissement.

14. Dispositif selon la revendication 13, caractérisé en ce que les enceintes (2, 2') sont déplaçables selon une trajectoire fixe.

15. Dispositif selon la revendication 13 ou 14, caractérisé en ce que l'enceinte (2) est déplaçable sur un chariot (12).

16. Dispositif selon la revendication 13 ou 14, caractérisé en ce que l'enceinte (2') est conçue en nacelle suspendue.

17. Dispositif selon la revendication 13 ou 14, caractérisé en ce que l'enceinte (2) est placée sur le bord d'une plate-forme rotative et en ce que des raccords pour les postes de traitement sont prévus sur sa périphérie à l'extérieur de la plate-forme.

18. Dispositif selon l'une des revendications 13 à 17, caractérisé en ce que l'agent d'imprégnation, par exemple de la poix ou du brai, sert à l'étanchéité entre l'enceinte (2) et le couvercle (14) lors de la mise en pression ou en dépression.

19. Dispositif selon la revendication 18, caractérisé en ce que le couvercle (14) et l'enceinte (2) comportent chacun une bride (30 ; 29), dont l'une (29) est pourvue d'une gorge annulaire (33) ouverte vers l'autre bride (30) opposée et reliée à une conduite d'arrivée (34) pour la poix ou le brai, et l'autre bride (30) est pourvue d'un canal médian (36) de mise à température fermé et opposé à la gorge annulaire (33) des conduites d'arrivée et de départ (37, 38) le mettant en communication avec l'extérieur.

20. Dispositif selon la revendication 19, caractérisé en ce que la bride (30) opposée à la gorge annulaire (33) comporte une nervure annulaire (35) faisant saillie dans la gorge, et dont la hauteur et la profondeur sont inférieures à celles de la bride annulaire.

FIG.1

FIG.2

FIG.3

FIG.4

FIG.5

FIG.6

FIG.7